(19) Europäisches Patentamt
European Patent Office
Office européen des brevets

(11) **EP 1 141 883 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(21) Anmeldenummer: **99959213.2**

(22) Anmeldetag: **15.10.1999**

(51) Int Cl.⁷: **G06K 9/64**

(86) Internationale Anmeldenummer:
**PCT/DE99/03314**

(87) Internationale Veröffentlichungsnummer:
**WO 00/039746 (06.07.2000 Gazette 2000/27)**

(54) **VERFAHREN ZUM VERGLEICHEN VON PUNKTMENGEN**

METHOD FOR COMPARING POINT SETS

PROCEDE DE COMPARAISON D'ENSEMBLES DE POINTS

(84) Benannte Vertragsstaaten:
**DE FR GB**

(30) Priorität: **29.12.1998 DE 19860679**

(43) Veröffentlichungstag der Anmeldung:
**10.10.2001 Patentblatt 2001/41**

(73) Patentinhaber: **ROBERT BOSCH GMBH**
**70442 Stuttgart (DE)**

(72) Erfinder: **HAHLWEG, Cornelius**
**D-31139 Hildesheim (DE)**

(56) Entgegenhaltungen:
• PICKENS D R ET AL: "Digital image motion correction by spatial warp methods" MEDICAL PHYSICS, JAN.-FEB. 1987, USA, Bd. 14, Nr. 1, Seiten 56-61, XP000885115 ISSN: 0094-2405
• PAVLIDIS I ET AL: "On-line handwriting recognition using physics-based shape metamorphosis" PATTERN RECOGNITION,US,PERGAMON PRESS INC. ELMSFORD, N.Y, Bd. 31, Nr. 11, 1. November 1998 (1998-11-01), Seiten 1589-1600, XP004134407 ISSN: 0031-3203
• WIDROW B: "The 'Rubber-Mask' technique. II. Pattern storage and recognition" PATTERN RECOGNITION, SEPT. 1973, UK, Bd. 5, Nr. 3, Seiten 199-211, XP002136702 ISSN: 0031-3203

**Beschreibung**

Die Erfindung betrifft ein Verfahren zum Vergleichen von zweidimensionalen Punktmengen. Unter einer zweidimensionalen Punktmenge kann jegliche Art von Anordnung von Objekten oder Merkmalen auf einer Fläche verstanden werden. Verfahren zum Vergleichen von kontinuierlichen zweidimensionalen Punktmengen wie etwa Bildern oder Bildausschnitten sind bekannt. Bei diesen werden zum Beispiel Kreuzkorrelationsverfahren (im Original- und Frequenzbereich) eingesetzt, um Übereinstimmungen zwischen mehreren Mengen zu finden. Diese Verfahren sind aufgrund der großen zu verarbeitenden Datenmenge sehr rechenaufwendig, außerdem sind diese Verfahren meist auf die Erkennung eng begrenzter Arten von Ähnlichkeit beschränkt. So kann zum Beispiel mit einer an zwei Bildausschnitten durchgeführten herkömmlichen Kreuzkorrelation in kartesischen Koordinaten ein Translationsvektor berechnet werden, um den eines der zwei Bilder verschoben werden muß, um es dem zweiten mit größtmöglicher Ähnlichkeit zu überlagern; daß sich durch eine Verzerrung, Stauchung oder Drehung eines Bildes möglicherweise eine noch größere Ähnlichkeit oder gar Identität erzielen ließe, bleibt bei der kartesischen Kreuzkorrelation unbemerkt.

Umgekehrt läßt sich mit einer Kreuzkorrelation in Polarkoordinaten erkennen, ob zwei Bilder durch Stauchung und Drehung ineinander überführbar sind, falls aber zusätzlich auch eine Translation erforderlich ist, bleibt die Ähnlichkeit unerkannt.

Aus Pickens et al.:"Digital image motion correction by spatial warp methods" MEDICAL PHYSICS, JAN.-FEB. 1987, USA, Bd. 14, Nr. 1, Seiten 56-61, XP000885115 ISSN: 0094-2405 ist eine zu Anspruch 1 analoge Lösung jedoch mit rein reellwertigen Eingangsdaten, reeller Trarisformationsfunktion und reellwertigen Ausgangsdaten bekannt.

Vorteile der Erfindung

Mit der vorliegenden Erfindung, die in den Ansprüchen 1 und 2 definiert wird, wird ein Verfahren zum Vergleichen von zweidimensionalen Punktmengen geschaffen, das es erlaubt, mit sehr geringem Rechenaufwand eine große Zahl unterschiedlicher Arten von Ähnlichkeit zu erkennen, und mit dem es zum Beispiel möglich ist, die Identität zweier Punktmengen zu erkennen, wenn die eine aus der anderen durch eine Kombination von Rotation, Translation und Stauchung beziehungsweise Dehnung hervorgeht. Hierfür ist erstaunlicherweise lediglich erforderlich, jedem Punkt $P_i$ der ersten Menge genau einen Punkt $G_i$ der zweiten Menge zuzuordnen und dann ein Gleichungssystem zu lösen, das auf folgendem Wege erhalten werden kann: Zunächst wird für die Punkte $P_i$ der ersten Menge eine Transformationsgleichung $P'_i = T(P_i)$ aufgestellt, wobei die Transformationsfunktion $T$ eine Mehrzahl von variierbaren Parametern $a_j$ hat, und es werden diejenigen Werte der Parameter $a_j$ ermittelt, für die die Summe über i der quadrierten Abstände zwischen $P'_i$ und $G_i$ ein Minimum annimmt. Die auf diese Weise erhaltenen Werte der Parameter $a_j$ werden als Maß für die Ähnlichkeit der Punktmengen verwendet.

Zum Ermitteln der gesuchten Werte der Parameter $a_j$ können herkömmliche Methoden der Analysis eingesetzt werden.

Besonders einfach zu handhaben ist das Verfahren dann, wenn jeder Punkt $P_i$, $G_i$ jeweils durch eine komplexe Zahl dargestellt wird.

Ein bevorzugter Sonderfall des erfindungsgemäßen Verfahrens ist ein Verfahren zum Vergleichen von zweidimensionalen Punktmengen, bei denen die Transformationsfunktion $T$ die Form eines Polynoms hat. In diesem Fall sind nämlich die Werte der Parameter $a_i$, für die die Summe der quadrierten Abstände ein Minimum annimmt, gegeben durch das Gleichungssystem 1.

$$\begin{pmatrix} \sum_i G_i P_i^{n*} \\ \vdots \\ \sum_i G_i P_i^{*} \\ \sum_i G_i \end{pmatrix} = \begin{pmatrix} \sum_i P_i^n P_i^{n*} & \cdots & \sum_i P_i P_i^{n*} & \sum_i P_i^{n*} \\ \vdots & & \vdots & \vdots \\ \sum_i P_i^n P_i^{*} & \cdots & \sum_i P_i P_i^{*} & \sum_i P_i^{*} \\ \sum_i P_i^n & \cdots & \sum_i P_i & \sum_i 1 \end{pmatrix} \begin{pmatrix} a_n \\ \vdots \\ a_1 \\ a_0 \end{pmatrix} \qquad (1)$$

Das Lösen derartiger linearer Gleichungssysteme wirft keinerlei Schwierigkeiten auf und ist mit einem entsprechend programmierten Computer oder Mikroprozessor vollautomatisch möglich.

Um das Verfahren zum Vergleichen von Bildern einzusetzen, die eine kontinuierliche Menge von Punkten umfassen, genügt es, aus jedem von zwei zu vergleichenden Bildern eine Anzahl von charakteristischen Punkten zu selektieren und so Punktmengen {..., $P_i$ ... } , { ... , $G_i$ ...} zu bilden, an denen das erfindungsgemäße Verfahren durchgeführt wird.

Bei den selektierten Punkten kann es sich zum Beispiel um Augen, Ohren oder andere markante Punkte der Abbildung eines Gesichtes handeln, die von einer Bedienungsperson markiert werden oder auch vollautomatisch festgelegt werden können, um die Ähnlichkeit der abgebildeten Person mit einem zweiten Bild oder einer Sammlung von Bildern zu ermitteln.

Eine andere wichtige Anwendung ist zum Beispiel das Aneinanderfügen von teilweise überlappenden Bildern, insbesondere von Landkarten. Dieses Problem tritt speziell bei elektronisch dargestellten Landkarten in modernen Kraftfahrzeug-Navigationssystemen auf. Ein solches Navigationssystem kann über einen Satz von Karten eines Gebiets, in dem sich der Fahrer eines Kraftfahrzeugs möglicherweise bewegt, verfügen, wobei diese Karten teilweise überlappen, aber nicht kontinuierlich ineinander übergehen. Falls solche Karten von unterschiedlichen Herstellern bezogen worden sind, können Unterschiede in der Art der Projektion, im Maßstab und in der Orientierung hinzukommen, die dem Navigationssystem den Wechsel von einem Kartenblatt auf ein anderes erschweren. In diesem Falle ist es mit Hilfe des erfindungsgemäßen Verfahrens möglich, eine Menge markanter Punkte, wie etwa Straßenkreuzungen auf einer der Karten zu wählen, eine entsprechende Menge in einer zweiten Karte zu wählen, jeden Punkt der einen Menge genau einem der anderen zuzuordnen, in dem eine Hypothese darüber aufgestellt wird, welche ausgewählten Kreuzungen einander möglicherweise entsprechen, und dann einen Vergleich nach dem erfindungsgemäßen Verfahren auszuführen. Wenn dieser Vergleich kein hinreichendes Maß an Übereinstimmung ergibt, wird eine neue Menge von Punkten in einer der Karten ausgewählt und ein erneuter Vergleich durchgeführt, wobei die neu ausgewählte Menge von Punkten selbstverständlich Elemente der früheren enthalten kann.

Weitere Merkmale und Vorteile der Erfindung ergeben sich aus der nachfolgenden Beschreibung von Ausführungsbeispielen mit Bezug auf die Figuren.

Zeichnungen

Es zeigen:

Figur 1                 zwei Mengen von Punkten in einer Ebene, an den das erfindungsgemäße Verfahren ausgeführt werden kann; und

Figuren 2 bis 4         Ergebnisse von erfindungsgemäßen Verfahren unter Verwendung von Polynomen verschiedener Ordnung.

Beschreibung von Ausführungsbeispielen

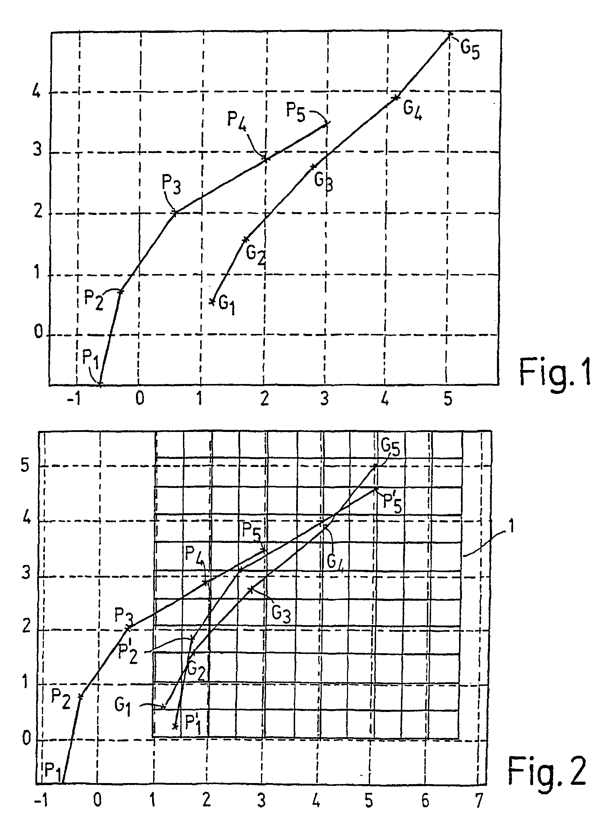

Figur 1 zeigt zwei Mengen von Punkten $P_1, ...P_5$ und $G_1, ...G_5$, die zur besseren Erkennbarkeit ihrer Zugehörigkeit zueinander jeweils durch eine Linie verbunden sind, aufgetragen in einem Koordinatenraster. Jeder dieser Punkte ist durch zwei Koordinatenwerte charakterisiert, die hier als Realteil und Imaginärteil einer komplexen Zahl aufgefaßt werden. Realteil und Imaginärteil sind an Ordinate und Abszisse des Koordinatensystems aufgetragen.

Die Punkte können jeweils die Koordinaten von markanten Orten zweier Landkarten wie etwa Straßenkreuzungen oder dergleichen darstellen, wobei diese zwei Landkarten in einem Navigationssystem eines Kraftfahrzeugs gespeichert sind; es könnte sich aber zum Beispiel auch bei den Punkten P1 und P5 um mit Hilfe eines GPS-Systems ermittelte Folge von Positionen des Kraftfahrzeugs und bei den Punkten G1 bis G5 um den Verlauf einer auf einer Karte des Navigationssystems dargestellten Straße handeln.

Um entscheiden zu können, ob beide Punktmengen zum gleichen Objekt gehören, das heißt hier, ob sie die gleiche Straße darstellen, ist es erforderlich, ihre Ähnlichkeit zu bewerten. Zu diesem Zweck wird diejenige Transformation T gesucht, die die Menge der Punkte $P_i$ in diejenige Menge von Punkten $P'_i$ überführt, für die die Summe der Abstandsquadrate $|P'_i\text{-}G_i|^2$ minimal wird. Diese Transformation T hat die Form eines Polynoms

$$P_i^{'} = T(P_i) = a_n \cdot P^n + \cdots a_2 \cdot P^2 + a_1 \cdot P + a_0 \tag{2}$$

Die Koeffizienten $a_n$ bis $a_0$ sind hier genauso wie die Punkte $P_i$ als komplexe Zahlen aufzufassen. Dabei steht $a_0$ für eine reine Verschiebungstransformation und $a_1$ für eine Dreh- Strecktransformation. In Anlehnung an die übliche, aus der Elektronik bekannte Terminologie für Kennlinienparameter wird vorgeschlagen, den quadratischen Koeffizienten $a_2$ als "Krümmung", den kubischen $a_3$ als "Windung" zu bezeichnen.

Die Extremalforderung der Minimierung der Abstandsquadrate läßt sich schreiben als

$$\sum_i \left(P_i' - G_i\right) \cdot \left(P_i' - G_i\right)^* \Rightarrow Min \qquad (3)$$

Aus der Kombination der Gleichungen 2 und 3 ergibt sich

$$\sum_i \left(a_n \cdot P_i^n + \cdots + a_2 \cdot P_i^2 + a_1 \cdot P_i + a_0 - G_i\right) \cdot$$
$$\left(a_n \cdot P_i^n + \cdots + a_2 \cdot P_i^2 + a_1 \cdot P_i + a_0 - G_i\right)^* \Rightarrow Min \qquad (4)$$

Hieraus läßt sich durch Bilden der partiellen Ableitungen $\frac{\partial}{\partial a_j}$, j=0,1...., n das Gleichungssystem (1) gewinnen.

Wenn man davon ausgeht, daß sich die Mengen der Punkte $P_i$ und $G_i$ durch Translation und Drehstrekkung, also durch Drehung und Änderung des Maßstabs ineinander überführen lassen müssen, genügt es, Gleichung (1) für den Fall n=1 zu betrachten. Hier erhält man in Vereinfachung der Gleichung (4) :

$$\sum_i \left(a_1 \cdot P_i + a_0 - G_i\right) \cdot \left(a_1 \cdot P_i + a_0 - G_i\right)^* \Rightarrow Min. \qquad (5)$$

Nach Bildung der partiellen Ableitung $\frac{\partial}{\partial a_0}$ und $\frac{\partial}{\partial a_1}$ und Nullsetzen ergibt sich das Gleichungssystem

$$\begin{pmatrix} \sum_i G_i \cdot P_i^* \\ \sum_i G_i \end{pmatrix} = \begin{pmatrix} \sum_i P_i \cdot P_i^* & \sum_i P^* \\ \sum_i P_i & \sum_i 1 \end{pmatrix} \begin{pmatrix} a_1 \\ a_0 \end{pmatrix} \qquad (6)$$

Verfahren zur Lösung des Gleichungssystems sind bekannt und brauchen nicht im einzelnen beschrieben zu werden. Man erhält als Lösung diejenigen Koeffizienten $a_1, a_0$, die die Transformationsgleichung der Form

$$P' = a_1 \cdot P + a_0$$

mit minimalem Fehlerquadrat liefern.

Der lineare komplexe Koeffizient $a_1$ beinhaltet den Drehwinkel (Phase beziehungsweise Argument) und die Streckung beziehungsweise Maßstabsänderung (Betrag) gegenüber G. Der skalare Koeffizient $a_0$ gibt die Translation an. Die Berechnung der Koeffizienten lieferte für die in Figur 1 gezeigten Punkte folgende Ergebnisse:

| Koeffizient | Komplexer Wert | Betrag | Argument/° |
|---|---|---|---|
| a1 | 0.9146-0.0209i | 0.9148 | -1.3091 |
| a0 | 2.1442+1.1495i | 2.4329 | 28.1956 |

Diejenige Transformation, die die größte Ähnlichkeit zwischen den Mengen der Punkte $P_i$ und $G_i$ herstellt, umfaßt somit eine Stauchung der Menge $P_i$ auf das 0,9-fache, eine Drehung um -1,3° sowie eine Verschiebung um 2,4 in Richtung 28°. Das Ergebnis ist in Figur 2 gezeigt, wobei auch das Koordinatenraster der Figur 1, in dem die Punkte $P_1$ bis $P_5$ eingebettet sind, mittransformiert wurde, um die Transformation anschaulicher zu machen.

Durch Berechnen des Werts des Fehlerquadrats aus Gleichung (3) läßt sich ein Maß für die Ähnlichkeit der zwei Punktmengen gewinnen.

Wenn dieses Fehlerquadrat einen vorgegebenen Grenzwert-überschreitet, kann daraus der Schluß gezogen werden, daß die zwei Punktmengen einander nicht entsprechen, und es kann eine andere Punktmenge aus der Karte ausgewählt werden und daran das Verfahren wiederholt werden, solange bis eine Anpassung mit einem so niedrigen Fehlerquadrat erzielt wird, daß eine Übereinstimmung der jeweils selektierten Punktmengen angenommen werden kann.

In analoger Weise wie oben beschrieben lassen sich auch Transformationsparameter unter Berücksichtigung von Krümmung und Windung finden. So führt zum Beispiel die Verwendung einer Transformation mit einem quadratischen Polynom $T(P_i)=a_2P_i^2+a_1P_i+a_0$ zu dem Gleichungssystem

$$\begin{pmatrix} \sum_i G_i \cdot P_i^2 \\ \sum_i G_i \cdot P_i^\bullet \\ \sum_i G_i \end{pmatrix} = \begin{pmatrix} \sum_i P^2{}_i \cdot P_i^{2\bullet} & \sum_i P_i \cdot P_i^{2\bullet} & \sum_i P^{2\bullet} \\ \sum_i P^2{}_i \cdot P_i^\bullet & \sum_i P_i \cdot P_i^\bullet & \sum_i P^\bullet \\ \sum_i P_i^2 & \sum_i P_i & \sum_i 1 \end{pmatrix} \begin{pmatrix} a_2 \\ a_1 \\ a_0 \end{pmatrix} \qquad (12)$$

Die Lösung dieses Gleichungssystems ergibt für die gezeigten Punkte $P_1$ bis $P_5$ beziehungsweise $G_1$ bis $G_5$ folgende Ergebnisse:

| Koeffizient | Komplexer Wert | Betrag | Argument/° |
|---|---|---|---|
| a2 | 0.0272-0.0113i | 0.0295 | -22.5600 |
| a1 | 0.8311-0.0945i | 0.8365 | -6.4869 |
| a0 | 2.0826+1.1371i | 2.3728 | 28.6345 |

Eine Aussage über die Ähnlichkeit kann nun zum Beispiel über das Verhältnis des Betrages des quadratischen Koeffizienten $a_2$ zum Betrag des linearen Koeffizienten $a_1$, also über den nichtlinearen Anteil der Transformation erhalten werden:

$$\frac{(a_2)}{(a_1)} = 0.035$$

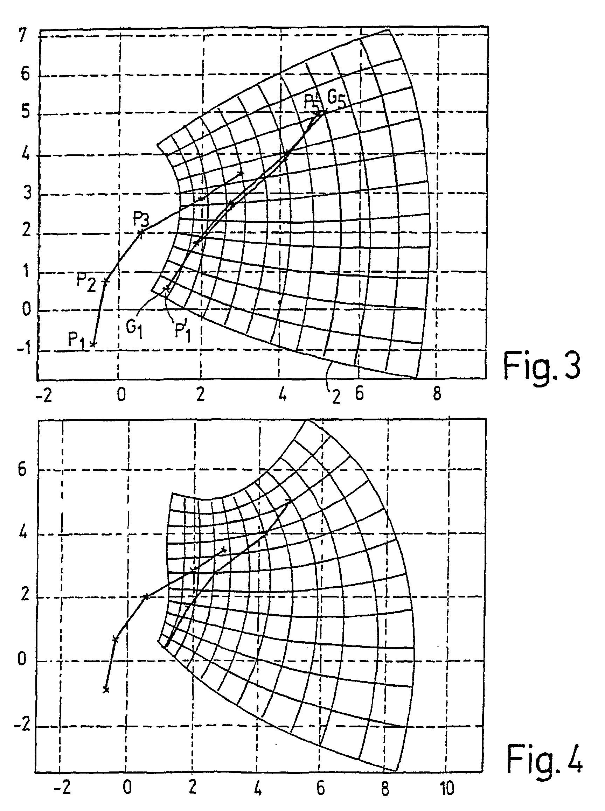

Das Ergebnis der Transformation ist in Figur 3 gezeigt, wobei die Transformation auch am Koordinatenraster der Punkte P1 bis P5 durchgeführt worden ist, wodurch das verzerrte Raster 2 erhalten wurde.

Figur 4 zeigt das Ergebnis einer Transformation unter Verwendung eines kubischen Polynoms T mit nach der oben beschriebenen Methode optimierten Koeffizienten $a_3,a_2,a_1,a_0$. Die Koeffizienten sind in der nachfolgenden Tabelle angegeben.

| Koeffizient | Komplexer Wert | Betrag | Argument/° |
|---|---|---|---|
| a3 | -0.0048-0.0136i | 0.0144 | 109.4400 |
| a2 | 0.1109-0.0219i | 0.1130 | -11.1708 |
| a1 | 0.8353-0.1845i | 0.8554 | -124554 |
| a0 | 2.0541+0.9899i | 2.2802 | 25.7301 |

Dabei ist zu beachten, daß aufgrund der Verwendung der Fehlerbetragsquadratmethode sich für jede höhere Ordnung der Anpassung neue Werte der einzelnen Koeffizienten ergeben und die Summe der Fehlerquadrate immer geringer wird, je mehr optimierbare Koeffizienten verwendet werden. Daher ist auch die Veränderung eines Koeffizienten beim Übergang zu der nächsthöheren Anpassungsstufe als ein Maß für die Ähnlichkeit verwendbar.

**Patentansprüche**

**1.** Verfahren zum Aneinanderfügen von zwei teilweise überlappenden Bildern, insbesondere von Landkarten, bei dem von jedem Bild je eine zweidimensionale Punktmenge ($P_1$, $P_2$, ... $P_5$; $G_1$, $G_2$, ... $G_5$) aus dem Überlappungsbereich miteinander verglichen wird, mit den Schritten:

- Selektieren der Punkte $P_i$ der ersten Menge aus dem ersten Bild und der Punkte $G_i$ der zweiten Menge aus dem zweiten Bild;
- jeder Punkt wird durch eine komplexe Zahl dargestellt;
- eindeutiges und umkehrbares Zuordnen jeweils genau eines Punkts ($G_i$) der zweiten Menge zu jedem einzelnen Punkt ($P_i$) der ersten Menge;
- Lösen eines Gleichungssystems, das durch Aufstellen einer komplexen Transformationsgleichung $P_i' = T (P_i)$ für die Menge der Punkte ($P_i$) mit variierbaren komplexen Parametern ($a_0$, $a_1$, ...) der Transformationsfunktion $T$ und Ermitteln derjenigen Werte der Parameter $a_0$, $a_1$, ..., für die die Summe über alle quadrierten Werte der Abstände zwischen einem transformierten Punkt ($P_i'$) der ersten Menge und dem entsprechenden Punkt ($G_i$) der zweiten Menge ein Minimum annimmt, erhältlich ist, wobei die so erhaltenen Werte der Parameter $a_0$, $a_1$, ... als Maß für die Ähnlichkeit der Punktmengen verwendet werden.

2. Verfahren zum Aneinanderfügen von zwei teilweise überlappenden Bildern, .insbesondere von Landkarten, bei dem von jedem Bild je eine zweidimensionale Punktmenge ($P_1$, $P_2$, ... $P_5$; $G_1$, $G_2$, ... $G_5$) aus dem Überlappungsbereich miteinander verglichen wird, mit den Schritten: Selektieren der Punkte $P_i$ der ersten Menge aus dem ersten Bild und der Punkte $G_i$ der zweiten Menge aus dem zweiten Bild; Darstellen jedes Punktes durch eine komplexe Zahl, eindeutiges und umkehrbares Zuordnen jeweils genau eines Punkts ($G_i$) der zweiten Menge zu jedem einzelnen Punkt ($P_i$) der ersten Menge; Lösen des Gleichungssystems

$$\begin{pmatrix} \sum_i G_i P_i^{n*} \\ \vdots \\ \sum_i G_i P_i^* \\ \sum_i G_i \end{pmatrix} = \begin{pmatrix} \sum_i P_i^n P_i^{n*} & \cdots & \sum_i P_i P_i^{n*} & \sum_i P_i^{n*} \\ \vdots & & \vdots & \vdots \\ \sum_i P_i^n P_i^* & \cdots & \sum_i P_i P_i^* & \sum_i P_i^* \\ \sum_i P_i^n & \cdots & \sum_i P_i & \sum_i 1 \end{pmatrix} \begin{pmatrix} a_n \\ \vdots \\ a_1 \\ a_0 \end{pmatrix} \qquad (1)$$

wobei die so erhaltenen Werte der komplexen Parameter $a_0$, $a_1$, ... als Maß für die Ähnlichkeit der Punktmengen verwendet werden.

3. Verfahren nach Anspruch 2, **dadurch gekennzeichnet, dass** die Zahl der Punkte einer Menge größer ist als die Zahl der Parameter $a_0$, $a_1$, ... ist.

4. Verfahren nach Anspruch 2 oder 3, **dadurch gekennzeichnet, dass** die Zahl der Parameter $a_0$, $a_1$, ... kleiner als 5 ist.

5. Verfahren zum Beurteilen der Ähnlichkeit zweier Bilder, **dadurch gekennzeichnet, dass** aus jedem Bild eine Anzahl von charakteristischen Punkten selektiert wird, um Punktmengen ($P_1$, $P_2$, ... $P_5$; $G_1$, $G_2$, ... $G_5$) zu bilden, und dass an den so gebildeten Punktmengen ein Verfahren nach einem der vorhergehenden Ansprüche durchgeführt wird.

6. Verfahren nach Anspruch 5, **dadurch gekennzeichnet, dass** es mehrere Male wiederholt wird, wobei das erste Bild das gleiche bleibt und das zweite Bild zwischen Wiederholungen ausgewechselt wird, um aus einer Mehrzahl zweiter Bilder das dem ersten ähnlichste zu finden.

7. Verfahren nach Anspruch 6, **dadurch gekennzeichnet, dass** es mehrere Male wiederholt wird, wobei zwischen Wiederholungen wenigstens ein Element wenigstens einer der Punktmengen ($P_1$, $P_2$, ... $P_5$; $G_1$, $G_2$, ... $G_5$) verändert wird.

**Claims**

1. Method for joining together two partially overlapping images, in particular maps, in the case of which from each image one two-dimensional point set ($P_1$, $P_2$, ... $P_5$; $G_1$, $G_2$, ... $G_5$) from the overlap area are compared with one another, having the steps:

- selecting the points $P_i$ of the first set from the first image, and the points $G_i$ of the second set from the second image;
- each point is represented by a complex number;
- unique and reversible assignment of in each case exactly one point ($G_i$) of the second set to each individual point ($P_i$) of the first set;
- solving a system of equations that can be obtained by setting up a complex transformation equation $P_i' = T$ ($P_i$) for the set of points ($P_i$) with variable complex parameters ($a_0$, $a_1$, ...) of the transformation function T, and determining those values of the parameters $a_0$, $a_1$, ... for which the sum over all squared values of the distances between a transformed point ($P_i'$) of the first set and the corresponding point ($G_i$) of the second set assumes a minimum, the values of the parameters $a_0$, $a_1$, ... thus obtained being used as a measure of the similarity of the point sets.

2. Method for joining together two partially overlapping images, in particular of maps, in the case of which from each image one two-dimensional point set ($P_1$, $P_2$, ... $P_5$; $G_1$, $G_2$, ... $G_5$) from the overlap area are compared with one another, having the steps: selecting the points $P_i$ of the first set from the first image, and the points $G_i$ of the second set from the second image; representing each point by a complex number; unique and reversible assignment of in each case exactly one point ($G_i$) of the second set to each individual point ($P_i$) of the first set; solving the system of equations

$$\begin{pmatrix} \sum_i G_i P_i^{n\bullet} \\ \vdots \\ \sum_i G_i P_i^\bullet \\ \sum_i G_i \end{pmatrix} = \begin{pmatrix} \sum_i P_i^n P_i^{n\bullet} & \cdots & \sum_i P_i P_i^{n\bullet} & \sum_i P_i^{n\bullet} \\ \vdots & & \vdots & \vdots \\ \sum_i P_i^n P_i^\bullet & \cdots & \sum_i P_i P_i^\bullet & \sum_i P_i^\bullet \\ \sum_i P_i^n & \cdots & \sum_i P_i & \sum_i 1 \end{pmatrix} \begin{pmatrix} a_n \\ \vdots \\ a_1 \\ a_0 \end{pmatrix} \qquad (1)$$

the values of the complex parameters $d_0$, $a_1$, ... thus obtained being used as a measure of the similarity of the point sets.

3. Method according to Claim 2, **characterized in that** the number of the points of a set is greater than the number of the parameters $a_0$, $a_1$, ....

4. Method according to Claim 2 or 3, **characterized in that** the number of the parameters $a_0$, $a_1$, ... is less than 5.

5. Method for assessing the similarity of two images, **characterized in that** a number of characteristic points are selected from each image in order to form point sets ($P_1$, $P_2$, ... $P_5$; $G_1$, $G_2$, ... $G_5$), and **in that** a method according to one of the preceding claims is carried out on the point sets thus formed.

6. Method according to Claim 5, **characterized in that** it is repeated several times, the first image remaining the same, and the second image being exchanged between repetitions in order to find, from a multiplicity of second images, the one most similar to the first.

7. Method according to Claim 6, **characterized in that** it is repeated several times, at least one element of at least one of the point sets ($P_1$, $P_2$, ... $P_5$; $G_1$, $G_2$, ... $G_5$) being changed between repetitions.

**Revendications**

1. Procédé de jonction de deux images qui se chevauchent en partie, notamment de cartes routières, selon lequel on compare deux ensembles bidimensionnels de points ($P_1$, $P_2$,...$P_5$ ; $G_1$, $G_2$,...$G_5$) provenant de chacune des zones de chevauchement des deux images, procédé selon lequel

- on sélectionne les points (P$_i$) du premier ensemble dans la première image et les points (G$_i$) du second ensemble dans la seconde image,
- on représente chaque point par un nombre complexe,
- on associe de manière bijective et réversible chaque fois exactement un point (G$_i$) du second ensemble à un point (P$_i$) du second ensemble.
- on résout un système d'équations obtenu en établissant une équation de transformation complexe P'$_i$ = T (P$_i$) pour l'ensemble des points (P$_i$) avec des paramètres variables complexes (a$_0$, a$_1$, ...) de la fonction de transformation T et on détermine les valeurs des paramètres a$_0$, a$_1$, .. qui pour la somme de toutes les distances quadratiques entre les points transformés (P$_i$') du premier ensemble et le point correspondant (G$_i$) du second ensemble, donnent un minimum,
- on utilise les valeurs ainsi obtenues pour les paramètres a$_0$, a$_1$,... comme mesures de la similitude des ensembles de points.

2. Procédé de jonction de deux images qui se chevauchent partiellement, notamment de cartes routières, selon lequel on compare deux ensembles bidimensionnels de points (P$_1$, P$_2$,...P$_5$ ; G$_1$, G$_2$, ...G$_5$) pris dans chacune des deux images dans la zone de chevauchement,
procédé selon lequel

- on sélectionne les points (P$_i$) du premier ensemble dans la première image et les points (G$_i$) du second ensemble dans la seconde image,
- on représente chaque point par un nombre complexe,
- on fait une association bijective et réversible entre chaque point (G$_i$) du second ensemble et chaque point (P$_i$) du premier ensemble,
- on résout le système d'équations :

$$\begin{pmatrix} \sum_i G_i P_i^{n*} \\ \vdots \\ \sum_i G_i P_i^* \\ \sum_i G_i \end{pmatrix} = \begin{pmatrix} \sum_i P_i^n P_i^{n*} & \cdots & \sum_i P_i P_i^{n*} & \sum_i P_i^{n*} \\ \vdots & & \vdots & \vdots \\ \sum_i P_i^n P_i^* & \cdots & \sum_i P_i P_i^* & \sum_i P_i^* \\ \sum_i P_i^n & \cdots & \sum_i P_i & \sum_i 1 \end{pmatrix} \begin{pmatrix} a_n \\ \vdots \\ a_1 \\ a_0 \end{pmatrix} \qquad (1)$$

les valeurs complexes ainsi obtenues pour les paramètres a$_0$, a$_1$,... étant une mesure de la similitude des ensembles de points.

3. Procédé selon la revendication 2,
   **caractérisé en ce que**
   le nombre de points d'un ensemble est plus grand que le nombre de paramètres a$_0$, a$_1$, ....

4. Procédé selon l'une quelconque des revendications 2 ou 3,
   **caractérisé en ce que**
   le nombre de paramètres (a$_0$, a$_1$,...) est inférieur à 5.

5. Procédé pour juger de la similitude de deux images,
   **caractérisé en ce qu'**
   on sélectionne dans chaque image un nombre de points caractéristiques pour former des ensembles de points (P$_1$, P$_2$, ... P$_5$ ; G$_1$, G$_2$, ...G$_5$) et on effectue sur les ensembles de points ainsi formés un procédé selon l'une des revendications précédentes.

6. Procédé selon la revendication 5,
   **caractérisé en ce qu'**
   on répète l'opération plusieurs fois, la première image restant la même et la seconde image étant modifiée entre les répétitions pour trouver parmi un ensemble de secondes images celle qui est la plus analogue de la première image.

**7.** Procédé selon la revendication 6,
**caractérisé en ce qu'**
on répète l'opération plusieurs fois et entre les répétitions on modifie au moins un élément d'au moins un ensemble de points $(P_1, P_2, ...P_5 ; G_1, G_2, ...G_5)$.

Fig.1

Fig.2

Fig. 3

Fig. 4